# EUROPEAN PATENT SPECIFICATION

(11) **EP 2 995 699 B1**
(45) Date of publication and mention of the grant of the patent: **12.06.2019**
(21) Application number: 15184813.2
(22) Date of filing: 11.09.2015
(51) Int. Cl.: C23D 5/02, C23D 3/00, C03C 8/20

(54) **METHOD FOR MANUFACTURING A PORCELAIN ENAMEL COATING OF A METAL SUBSTRATE AND ARTICLE OBTAINED BY THE METHOD**
VERFAHREN ZUR HERSTELLUNG EINER PORZELLAN-EMAILBESCHICHTUNG EINES METALLSUBSTRATS UND ARTIKEL ERHALTEN DURCH DAS VERFAHREN
PROCÉDÉ DE FABRICATION D'UNE COUCHE PORCELAINE ÉMAIL SUR UN SUBSTRAT MÉTALLIQUE ET ARTICLE OBTENUS PAR LA MÉTHODE

(30) Priority: 12.09.2014 IT TV20140133
(43) Date of publication of application: 16.03.2016
(73) Proprietor: 3V Enterprise S.p.A., 20121 Milano (IT)
(72) Inventor: GRESSINI, Stefano, 30027 San Donà di Piave (VE) (IT)
(74) Representative: Dragotti, Gianfranco

(56) References cited:
- EP-A1- 0 739 997
- EP-A1- 0 786 538
- GB-A- 1 189 838
- GB-A- 2 118 928
- US-A- 3 062 685
- US-A- 3 290 137

## Description

The present invention relates to a method for manufacturing a porcelain enamel coating in particular for chemical, pharmaceutical and food-processing apparatus, and to apparatus comprising a porcelain enamel obtained using this method.

In particular, the present invention relates to a method for enamelling reactors, tanks, heat exchangers and other types of apparatus for the chemical, pharmaceutical and food industry to which reference is made below.

The porcelain enamel is mainly applied onto a metal substrate consisting of ferrous materials, such as steel and cast iron, since in given applications ferrous materials are subject to corrosion and oxidation which may seriously damage the functionality of the part.

Also known, however, are other uses of porcelain enamel on materials which are less prone to corrosion, such as aluminium, copper, stainless steel, and nickel alloys.

In order to obtain an enamelled surface, first of all a coupling agent (primer) is applied onto the metal substrate in order to ensure the necessary fixing of the covering glass to the substrate.

The primer allows the formation of suitable chemical bonds with the metal substrate and ensures the availability of covalent bonds which favour adhesion of the covering layers. The covalent bonds which are provided by the primer employ the oxygen which is made available by the lattice-forming oxides contained in the glass frit used for formation of the porcelain enamel layer, as will be clarified below.

So-called glass frits are used for the glass layer. The glass frits are obtained by means of fusion, at a temperature of between 1000 and 1500°C, from a mixture of inorganic raw materials. The formulation of the mixture determines the chemical composition of the enamel and, consequently, its chemical, physical and mechanical characteristics, which are essential factors in view of the use for which the final enamelled product is intended.

The process for obtaining the glass frits will not be described in further detail, since it is known per se to the person skilled in the art.

The glass frits of the known type contain lattice forming agents such as SiO₂ and B₂O₃, and various amorphous lattice modifiers which give the glass particular optical characteristics, such as the cobalt blue and white colouring or the various shades of blue which are normally used in the chemical and pharmaceutical industry.

The prior art has always used enamels of the type opaque to visible light, where the first layers, in the proximity of the metal substrate, are invisible even under optical microscopes. The opacity hides any defects at the locations where it is most likely that they will occur, namely at the interface between metal substrate and primer and in the glass layers immediately above the primer.

This opacity is due to the amorphous lattice modifiers, the use of opacifying agents and the preparation of the enamel slurries using micrometric suspending materials. The transparency of the amorphous structure of the glass is therefore hindered in the wavelength range of visible light (between 0.4 and 0.7 µm).

Consequently, the standard used for inspections aimed at assessing the integrity of and the defects present in porcelain enamel layers (standard EN 15159) takes into account only the defects which emerge on the surface, classifying them and assessing them so that it may decided whether or not the coating is acceptable. The purpose is to minimize the risk of splintering during use of the coated articles which could result in contamination of the product which is being processed, corrosion of the reactor and the presence of spot-like defects (such as bubbles and dross) which could give rise to local corrosion during operation of the apparatus.

The main defects may be due to the presence of dross or the presence of air bubbles in the glass layers.

The dross may be of a metallic, ceramic or other nature and is trapped and embedded in the glass. Depending on the orientation of the dross, the standards envisage polishing the vitreous surface using suitable grinding discs until the impurities are removed.

The air or gas bubbles may arise both during the porcelain enamelling process (heat treatment at temperatures which vary between about 750°C and 900°C), but may also be attributable to defects in the substrate due for example to welding. In conventional enamels, owing to opacity of the glass, the bubbles are eliminated when considered to be dangerous, where they emerge on the surface or in the case when a slight depression in the surface enamel indicates the presence of a bubble even though it may not be directly visible.

The aforementioned standard contains moreover a guideline for the identification of other defects. A more detailed description of these defects may be obtained by referring to the said standard.

Methods known in the art are for example described in US 3290137, EP 0739997, EP 0786538 and GB 2118928.

The prior art, although widely used, is not without drawbacks.

Firstly, the defects in the porcelain enamel of the prior art which are corrected are only those defects which are visible on the surface or which have an effect on the surface layer. In other words, defects which for example affect the interface between metallic substrate and vitreous enamel (primer and covering enamel) may not be seen and therefore may not be corrected.

Furthermore, the method by means of which the enamel is usually applied does not allow the operator to control constantly the defects which form during application.

The object of the invention is therefore to solve at least partially the drawbacks of the prior art.

A first task of the present invention is to provide a method for manufacturing a porcelain enamel coating for chemical, pharmaceutical and food-processing apparatus which allows coatings with fewer defects compared to the coatings of the prior art to be obtained.

A second task of the present invention is to provide a method for manufacturing a porcelain enamel coating for chemical, pharmaceutical and food-processing apparatus which allows step-by-step monitoring for the presence of defects.

Moreover, the aim is to provide a method which allows the thickness of the porcelain enamel layer to be assessed during manufacture thereof.

A further task of the present invention is to provide a method which allows the corrosion affecting the coating of a process reactor or the tank to be evaluated on the basis of a thickness assessed visually inside the reactor.

The object and the tasks are achieved with a method according to Claim 1 and an article according to Claim 9.

The characteristic features and advantages of the method according to the present invention will become clearer from the description below of possible embodiments, provided solely by way of a non-limiting explanation.

The method for manufacturing a porcelain enamel coating of a metal substrate for chemical, pharmaceutical or food-processing apparatus according to the present invention comprises a first step during which the surface of the metal substrate is prepared for the subsequent application of the primer.

According to a possible embodiment of the present invention, the surface may undergo an abrasive blasting operation.

Then, and as has just been mentioned, a primer is applied to the surface of the metal substrate. The characteristic features and the system by means of which fixing between substrate and primer is performed are known per se to the person skilled in the art and therefore will not be described in further detail.

After application of the primer, the article is subjected to firing in an oven at a temperature of between 750 and 900°C for a time period which may vary depending for example on the dimensions of the article. With this step fixing of the primer to the metal substrate is obtained.

After leaving the oven the article is left to cool in the air until it reaches room temperature.

Then application of an enamel suspension comprising water and a glass frit is performed.

The application may be performed mainly in two ways. According to a first embodiment of the invention, the enamel suspension is applied wet through a nozzle from which the suspension is sprayed onto the surface.

Application and firing of the porcelain enamel layer are repeated depending on the thickness of porcelain enamel which is to be produced.

The glass frit which is applied is characterized in that it comprises a quantity of lattice modifiers belonging to the transition metals, equal to less than 1% of the total volume of the glass frit. A quantity of opacifying oxides equal to less than 1% of the total volume of the glass frit is added to the glass frit. The enamel suspension comprises a quantity of suspending agents with dimensions greater than the wavelength range of visible radiation, equal to less than 1% of the total volume of the glass frit.

According to a preferred embodiment of the present invention, the glass frit does not comprise lattice modifiers belonging to the transition metals.

According to the invention, the glass frit does not comprise opacifying agents.

In a further preferred embodiment the enamel suspension does not comprise suspending agents with dimensions greater than the wavelength of visible radiation.

The lattice modifiers belonging to the transition metals, such as Cu, Ti, Cr, Mn, Fe, Co, Ni, are able to absorb selectively given wavelengths in the visible light range. Owing to the absence of these oxides the starting frit does not have a particular colouring. In this way the porcelain enamel arising therefrom has a low coefficient of absorption for all the wavelengths of the visible radiation spectrum.

The opacifying oxides, such as TiO₂, SnO₂, ZrO₂, CeO₂, impart opacity to the layers since the particles produce optical diffusion, diffraction, refraction and interference effects.

The use of suspending agents with dimensions predominantly smaller than the wavelength range of visible radiation, i.e. transparent to light radiation, allows the presence of other possible sources of diffusion and light interference in the porcelain enamel to be minimized. These materials may be for example chosen from: stratified and non-stratified phyllosilicates, montmorillonites, hydrated magnesium silicates.

The presence of these suspension agents promotes the development of a bubble structure which is fairly homogeneous and uninvasive from an optical point of view. Bubbles are inevitable in a porcelain enamel in view of the presence of water in the suspension which is applied.

The enamel suspension is prepared by firstly grinding the components mentioned above in a ball mill for a time period which depends on the volume of material treated and the size of the particulate matter which is to be obtained.

After the enamel application step, firing inside an oven at a temperature of between 700 and 900°C is performed.

At the oven outlet, the operator may inspect immediately the porcelain enamel layer owing to the transparency and translucence of the layer, with the possibility, therefore, of detecting any defects which originate at the interface between steel substrate and vitreous enamel or in the vitreous enamel itself. As is known, these defects may result in splintering of the coating also during the subsequent coating application steps and in localized corrosion during operation of the apparatus.

If the defect is found, the operator may immediately proceed to remove, mechanically, the zone affected by the defect and apply a new coating layer. Mechanical removal may be performed for example using grinding discs.

The resultant enamel is covered with small bubbles typical of the structure of all vitreous porcelain enamels. Unlike, however, that which occurs in enamels of the prior art, the bubbles are all visible at a microscopic level right down to the interface with the steel. At a macroscopic level the smallest bubbles give the enamel a whitish milky appearance, while making it possible to identify the larger-diameter bubbles or defects present also at a greater depth.

Consequently, unlike conventional enamels, the shade of colour is not uniform from the first to the last enamel layer, but varies with an increase in the thickness of the porcelain enamel layer.

In accordance with a possible embodiment of the method according to the present invention, the operator may at the end each enamel firing step carry out a visual comparison with a previously calibrated sample in order to obtain information about the thickness of porcelain enamel achieved.

In particular, with an increase in the thickness, this increasing the presence of bubbles still visible even in the deeper-lying layers, the enamel assumes an increasingly whiter colour.

For the same reason, via the method of the present invention it is also possible to evaluate, during operation of the coated article, any corrosion affecting the article, allowing the plant operators the possibility of repairing the corroded zone.

## Claims

1. Method for manufacturing a porcelain enamel coating of a metal substrate comprising the steps of:
a) preparing the surface of the metal substrate;
b) applying a primer on the metal substrate;
c) firing inside an oven at a temperature of between 750 and 900°C;
d) applying an enamel suspension comprising water and a glass frit, said glass frit does not comprise opacifying oxides;
e) firing inside an oven at a temperature of between 700 and 900°C; and
f) repeating steps d) and e) according to the desired thickness of porcelain enamel;
**characterized in that** said glass frit comprises a quantity of lattice modifiers belonging to the transition metals, equal to less than 1% of the total volume of the glass frit; a quantity of opacifying oxides equal to less than 1% of the total volume of the glass frit is added to the glass frit;
and **in that** said enamel suspension comprises a quantity of suspending agents with dimensions greater than the wavelength range of visible radiation, equal to less than 1% of the total volume of the glass frit.

2. Method according to the preceding claim, **characterized in that** the glass frit does not comprise lattice modifiers belonging to the transition metals.

3. Method according to any one of the preceding claims, **characterized in that** the enamel suspension does not comprise suspending agents with dimensions greater than the wavelength range of visible radiation.

4. Method according to any one of the preceding claims, **characterized in that** it comprises a step f1) in which the operator, at the end of firing one of the enamel layers, examines the porcelain enamel for detection of possible defects.

5. Method according to the preceding claim, **characterized in that** if the examination by the operator detects a defect, the operator corrects the defect by means of partial removal and subsequent restoration of the porcelain enamel zone affected by the defect.

6. Method according to any one of the preceding claims, **characterized in that** it comprises a step f2) in which the operator, at the end of firing one of the enamel layers, examines the colour of the resulting enamel with a reference sample in order to evaluate the thickness of the enamel layer and decide whether to carry out again steps d) and e).

7. Method according to claim 1, **characterized in that** the step of preparing the surface of the metal substrate comprises an abrasive blasting operation.

8. Method according to any one of the preceding claims, **characterized in that**, in step d), the enamel suspension is applied wet through a nozzle from which the suspension is sprayed onto the surface.

9. Article comprising a porcelain enamel coating, obtained in accordance with the method of any one of claims 1-8.

## Patentansprüche

1. Verfahren zur Herstellung einer Porzellan-Emaillierungs-Schicht für ein Metallsubstrat, umfassend die folgenden Schritte:
a) Vorbereiten der Oberfläche des Metallsubstrats;
b) Auftragen eines Primers auf das metallische Substrat;
c) Brennen in einem Ofen bei einer Temperatur zwischen 750 und 900°C;
d) Aufbringen einer Emailsuspension, die Wasser und eine Glasurmasse umfasst, wobei die Glasurmasse keine trübenden Oxide umfasst;
e) Brennen in einem Ofen bei einer Temperatur zwischen 700 und 900°C; und
f) Wiederholen der Schritte d) und e) entsprechend der gewünschten Dicke des Porzellanemaillierung;
**dadurch gekennzeichnet, dass** die Glasurmasse eine Menge von zu den Übergangsmetallen gehörenden Gittermodifikatoren umfasst, die weniger als 1% des Gesamtvolumens der Glasurmasse ausmachen; und eine Menge an trübenden Oxiden, die gleich oder weniger als 1% des Gesamtvolumens der Glasurmasse ausmacht, der Glasurmasse zugegeben wird;
und dass die Emailsuspension eine Menge von Suspensionsmitteln mit Dimensionen, die größer als der Wellenlängenbereich der sichtbaren Strahlung ist, von gleich oder weniger als 1% des Gesamtvolumens der Glasurmasse umfasst.

2. Verfahren gemäß dem vorstehenden Anspruch, **dadurch gekennzeichnet, dass** die Glasurmasse keine zu den Übergangsmetallen gehörenden Gittermodifikatoren umfasst.

3. Verfahren gemäß einem der vorstehenden Ansprüche, **dadurch gekennzeichnet, dass** die Emailsuspension keine Suspendiermittel mit Abmessungen, die größer sind als der Wellenlängenbereich der sichtbaren Strahlung, umfasst.

4. Verfahren gemäß einem der vorhergehenden Ansprüche, **dadurch gekennzeichnet, dass** es einen Schritt f1) umfasst, bei dem der Bediener am Ende des Brennens einer der Emaillierschichten das Porzellan-Email zur Erkennung möglicher Defekte untersucht.

5. Verfahren gemäß dem vorstehenden Anspruch, **dadurch gekennzeichnet, dass**, wenn die Prüfung durch den Bediener einen Fehler feststellt, der Bediener den Fehler durch teilweise Entfernung und anschließende Wiederherstellung der vom Fehler betroffenen Emaillierzone aus Porzellan korrigiert.

6. Verfahren gemäß einem der vorhergehenden Ansprüche, **dadurch gekennzeichnet, dass** es einen Schritt f2) umfasst, in dem der Bediener am Ende des Brennens einer der Emaillierschichten die Farbe des resultierenden Emails mit einem Referenzmuster untersucht, um die Dicke der Emaillierschicht zu bewerten und zu entscheiden, ob die Schritte d) und e) erneut durchgeführt werden sollen.

7. Verfahren gemäß Anspruch 1, **dadurch gekennzeichnet, dass** der Schritt zum Vorbereiten der Oberfläche des Metallsubstrats einen abrasiven Strahlvorgang umfasst.

8. Verfahren gemäß einem der vorstehenden Ansprüche, **dadurch gekennzeichnet, dass** im Schritt d) die Emailsuspension nass durch eine Düse aufgetragen wird, von der aus die Suspension auf die Oberfläche gesprüht wird.

9. Gegenstand, umfassend eine Porzellan-Emaillierung, erhalten gemäß dem Verfahren gemäß einem der Ansprüche 1-8.

## Revendications

1. Procédé de fabrication d'un revêtement en porcelaine émaillée d'un substrat métallique comprenant les étapes consistant à :
a) préparer la surface du substrat métallique ;
b) appliquer une amorce sur le substrat métallique ;
c) allumer l'intérieur d'un four à une température comprise entre 750 et 900°C ;
d) appliquer une suspension d'émail comprenant de l'eau et une fritte de verre, ladite fritte de verre ne comprenant pas d'oxydes opacifiants ;
e) allumer l'intérieur d'un four à une température comprise entre 700 et 900°C ; et
f) répéter les étapes d) et e) selon l'épaisseur souhaitée de la porcelaine émaillée ;
**caractérisé en ce que** ladite fritte de verre comprend une quantité de modificateurs de maillage appartenant aux métaux de transition, égale ou inférieure à 1% du volume total de la fritte de verre ; une quantité d'oxydes opacifiants égale ou inférieure à 1% du volume total de fritte de verre est ajoutée à la fritte de verre ;
et **en ce que** ladite suspension d'émail comprend une quantité d'agents en suspension avec des dimensions supérieures à la plage de longueurs d'onde du rayonnement visible, égale ou inférieure à 1% du volume total de la fritte de verre.

2. Procédé selon la revendication précédente, **caractérisé en ce que** la fritte de verre ne comprend pas de modificateurs de maillage appartenant aux métaux de transition.

3. Procédé selon l'une quelconque des revendications précédentes, **caractérisé en ce que** la suspension d'émail ne comprend pas d'agents en suspension avec des dimensions supérieures à la plage de longueurs d'onde du rayonnement visible.

4. Procédé selon l'une quelconque des revendications précédentes, **caractérisé en ce qu'**il comprend une étape f1) à laquelle l'opérateur, à la fin de la cuisson de l'une des couches d'émail, examine la porcelaine émaillée afin de détecter de possibles défauts.

5. Procédé selon la revendication précédente, **caractérisé en ce que**, si l'examen par l'opérateur détecte un défaut, l'opérateur corrige le défaut à l'aide d'une élimination partielle et d'une restauration ultérieure de la zone de porcelaine émaillée affectée par le défaut.

6. Procédé selon l'une quelconque des revendications précédentes, **caractérisé en ce qu'**il comprend une étape f2) à laquelle l'opérateur, à la fin de la cuisson de l'une des couches d'émail, examine la couleur de l'émail résultant avec un échantillon de référence afin d'évaluer l'épaisseur de la couche d'émail et de décider si les étapes d) et e) doivent être répétées ou non.

7. Procédé selon la revendication 1, **caractérisé en ce que** l'étape de préparation de la surface du substrat métallique comprend une opération de sablage.

8. Procédé selon l'une quelconque des revendications précédentes, **caractérisé en ce que**, à l'étape d), la suspension d'émail est appliquée de manière humide par le biais d'une buse depuis laquelle la suspension est pulvérisée sur la surface.

9. Article comprenant un revêtement en porcelaine émaillée, obtenu selon le procédé selon l'une quelconque des revendications 1 à 8.
